# EUROPÄISCHE PATENTSCHRIFT

(11) **EP 2 655 940 B1**
(45) Veröffentlichungstag und Bekanntmachung des Hinweises auf die Patenterteilung: **16.12.2015**
(21) Anmeldenummer: 11817467.1
(22) Anmeldetag: 21.12.2011
(51) Int. Cl.: F16J 9/20, F16J 9/26

(54) **KOLBENRING FÜR EINEN KOLBEN EINES VERBRENNUNGSMOTORS UND VERFAHREN ZU SEINER HERSTELLUNG**
PISTON RING FOR A PISTON OF AN INTERNAL COMBUSTION ENGINE, AND A METHOD FOR PRODUCING SAME
SEGMENT DE PISTON POUR PISTON DE MOTEUR À COMBUSTION INTERNE ET SON PROCÉDÉ DE PRODUCTION

(30) Priorität: 24.12.2010 DE 102010056168; 06.12.2011 DE 102011120145
(43) Veröffentlichungstag der Anmeldung: 30.10.2013
(73) Patentinhaber: MAHLE International GmbH, 70376 Stuttgart (DE)
(72) Erfinder: LOPEZ, Daniel, 70197 Stuttgart (DE); ALVES, Ricardo, P-4705-204 Braga (PT)
(74) Vertreter: BRP Renaud & Partner mbB Rechtsanwälte Patentanwälte Steuerberater
(86) Internationale Anmeldenummer: PCT/DE2011/002161
(87) Internationale Veröffentlichungsnummer: WO 2012/083930

(56) Entgegenhaltungen:
- WO-A1-2011/064888
- WO-A1-2012/045294
- DE-A1-102010 001 434
- DE-B3- 10 359 802
- US-A1- 2002 190 476

## Beschreibung

Die vorliegende Erfindung betrifft ein Verfahren zur Herstellung eines Kolbenrings für einen Kolben eines Verbrennungsmotors, mit einem Ringrücken, einer oberen Ringflanke, einer unteren Ringflanke und einer Lauffläche. Die vorliegende Erfindung betrifft ferner einen derartigen Kolbenring.

In modernen Otto- und Dieselmotoren sind die Bauhöhe und damit die Kompressionshöhe der Kolben reduziert, um Gewicht zu sparen. Ferner wird eine Reduzierung der Höhe der obersten Kolbenringe (Verdichtungsringe) angestrebt, um Reibungsverluste zu minimieren. Der radiale Anpressdruck der Kolbenringe ist, insbesondere am Ölabstreifring, ebenfalls reduziert, um Reibungsverluste zu minimieren. Die Zünddrücke und Temperaturen im Bereich des Kolbenkopfes sowie die Drehzahlen und damit die Anzahl der Hubbewegungen des Kolbens pro Minute sind dagegen erhöht. Daher ist es notwendig, den Ölverbrauch zu kontrollieren, um einerseits eine Unterversorgung mit Schmieröl und andererseits die Bildung von Ölkohle im Bereich der Kolbenringe sowie im Bereich der Ringnuten zu vermeiden.

Die deutsche Offenlegungsschrift DE 103 59 802 B3 offenbart einen gattungsgemäßen Kolbenring mit einer einseitig gekammerten und mit einer Beschichtung versehenen Lauffläche, wobei eine in die Beschichtung übergehende umlaufende Fläche vorgesehen ist, die unter Ausbildung einer Ölabstreifkante in die untere Ringflanke übergeht. Dieser Kolbenring weist eine zylindrische, d.h. im Querschnitt plane, Lauffläche auf.

Ein Kolbenring, insbesondere ein Verdichtungsring, darf im Motorbetrieb den Ölfilm nicht nach oben zum Verbrennungsraum hin abstreifen, da sonst der Ölverbrauch des Verbrennungsmotors stark zunimmt. Außerdem besteht die Gefahr der Ölkohlebildung sowie des Festfressens des Kolbenrings. Die Erfahrung hat gezeigt, dass bei Rechteckringen mit zylindrischer Lauffläche, wie sie in der De 103 59 802 B3 offenbart sind, nach längerer Laufzeit infolge des Kolbenkippens durch Verschleiß von selbst eine ballige Lauffläche und somit der erwünschte Keilspalt entsteht. Aufgrund dieser Erfahrung stehen heute serienmäßig Kolbenringe zur Verfügung, die bereits mit einer balligen Lauffläche hergestellt sind. Verwendet werden Kolbenringe mit symmetrisch oder asymmetrisch balliger Lauffläche.

Im Motorbetrieb hat der Ölfilm zwischen Kolbenring und Zylinderwand eine wichtige Dichtfunktion. Bei einer asymmetrisch balligen Lauffläche bildet sich eine besonders ausgeprägte Öldruckbarriere. Der vom Ringrücken her auf den Kolbenring wirkende Gasdruck quetscht den Ölfilm so, dass der höchste "Sperrdruck" im Bereich kurz vor der Unterkante des Kolbenrings entsteht. Das Gas kann somit nicht in Richtung Kurbelgehäuse strömen.

Zugleich streift ein derartiger Kolbenring bei der Abwärtsbewegung des Kolbens überschüssiges Öl zum Kurbelgehäuse hin ab. Damit wird vermieden, dass überschüssiges Öl zum Verbrennungsraum transportiert wird oder sich im Bereich der Kolbenringe bzw. Ringnuten ansammelt.

Die Aufgabe der vorliegenden Erfindung besteht darin, ein gattungsgemäßes Verfahren so weiterzubilden, dass ein Kolbenring erhalten wird, der im Motorbetrieb überschüssiges Öl besonders effektiv zum Kurbelgehäuse hin abstreift.

Die Lösung besteht in einem Verfahren mit den folgenden Merkmalen: (a) Bereitstellen eines Ringrohlings mit einem Ringrücken, einer oberen Ringflanke, einer unteren Ringflanke und einer äußeren Mantelfläche, (b) Ausformen einer asymmetrisch balligen Kontur entlang der äußeren Mantelfläche und Ausformen eines sich radial nach außen erstreckenden Vorsprungs in der äußeren Mantelfläche im Bereich der unteren Ringflanke, (c) Ausbilden einer Fase, eines konvex geformten Radius oder eines konkav geformten Radius mit einer axialen Höhe von B = 0,10 - 0,30 mm im Bereich der äußeren Mantelfläche zwischen der asymmetrisch balligen Kontur und der oberen Ringflanke, (d) Beschichten der äußeren Mantelfläche mit einem Beschichtungswerkstoff, (e) Abtragen des Vorsprungs unter Freilegen des Werkstoffs des Ringrohlings in Form einer in die Beschichtung übergehenden umlaufenden Fläche und Ausbilden einer Ölabstreifkante zwischen der umlaufenden Fläche und der unteren Ringflanke, (f) Nach- und/oder Fertigbearbeiten des beschichteten Ringrohlings zu einem fertigen Kolbenring.

Mit dem erfindungsgemäßen Verfahren wird auf besonders einfache und effiziente Weise ein Kolbenring mit einer asymmetrisch balligen Lauffläche erhalten, der mit einer ausgeprägten Ölabstreifkante versehen ist und im Motorbetrieb einen besonders wirksamen Transport überschüssigen Öls in Richtung der Kurbelwelle gewährleistet. Da im Bereich der äußeren Mantelfläche zwischen der asymmetrisch balligen Kontur und der oberen Ringflanke eine Fase oder ein konvex geformter Radius oder ein konkav geformter Radius ausgebildet wird, wird im Verfahrensverlauf ein glatter und bündiger Übergang zwischen der Beschichtung der Mantelfläche und der oberen Ringflanke erzielt (siehe unten Schritt (d)). Die Fase bzw. der Radius hat eine axiale Höhe von B = 0,10 - 0,30 mm.

Der erfindungsgemäß erhältliche Kolbenring eignet sich besonders gut zur Verwendung als Verdichtungsring. Ein erfindungsgemäßer Kolbenring zeichnet sich insbesondere dadurch aus, dass er als einseitig gekammerter Kolbenring ausgebildet ist (vgl. ISO 6621-4), d.h. eine einseitig gekammerte Lauffläche aufweist, die mit einer Dünnschicht versehen ist. Mit dem erfindungsgemäßen Verfahren ist es somit möglich, einen einseitig gekammerten Ring mit einer beschichteten Lauffläche in Form einer Dünnschicht (d.h. einer mittels PVD-Verfahren, CVD-Verfahren oder DLC-Verfahren erhältlichen Schicht) herzustellen. Ein derartiger Kolbenring ermöglicht ferner die Herstellung einer scharfen Ölabstreifkante, die von der Beschichtung befreit ist. Diese Ölabstreifkante kann mittels des erfindungsgemäßen Verfahrens in einer geringen Höhe ausgeführt werden, womit die Abdichtung gegen den sog. "Blow-by", d.h. gegen das während des Kompressionsschritts an den Kolbenringen in Richtung der Kurbelwelle vorbeiströmende Verbrennungsgas, verbessert wird.

Die vorliegende Erfindung ist sowohl in Ottomotoren aller Art (bspw. Ottomotoren mit Direkteinspritzung, Sportmotoren) als auch in Kfz- und Nfz-Dieselmotoren aller Art, auch für Sportmotoren, einsetzbar.

Vorteilhafte Weiterbildungen ergeben sich aus den Unteransprüchen.

Mit dem erfindungsgemäßen Verfahren können Ringrohlinge mit beliebigen Querschnittformen verwendet werden. Besonders gut geeignet sind bspw. Ringrohlinge in Form eines einseitigen Trapezrings, eines zweiseitigen Trapezrings oder eines Rechteckrings.

Die Ringrohlinge können, abhängig von den Anforderungen des Einzelfalls, aus jedem geeigneten Werkstoff hergestellt werden. Dazu gehören insbesondere Stahlwerkstoffe, bspw. Kohlenstoffstähle oder Edelstähle, sowie Gusseisenwerkstoffe. Geeignete Werkstoffe sind bspw. nach ISO 6621-3: Klasse 10 - Grauguss (unbehandelt), Klasse 20 - Grauguss (wärmebehandelt), Klasse 30 - perlitisches oder martensitisches Gusseisen (wärmebehandelt), Klasse 40 - karbidisches, perlitisches oder martensitisches schmiedbares Gusseisen (wärmebehandelt), Klasse 50 - perlitisches, martensitisches oder ferritisches Gusseisen mit Kugelgraphit (wärmebehandelt; Unterklasse 53, 56 für Sphäroguss), Klasse 60 - Stahl (legiert oder unlegiert; Unterklassen MC65 oder MC66 für Edelstahl, Unterklassen MC 61, MC 62, MC 63 oder MC64 für legierte Stähle).

Eine besonders vorteilhafte Weiterbildung besteht darin, dass der Vorsprung mit einer axialen Höhe von C = 0,10 - 0,55 mm und/oder mit einer radialen Breite von D = 0,07 - 0,09 mm ausgeformt wird. Damit wird im Verfahrensverlauf eine umlaufende Fläche erhalten, deren axiale Höhe ausreichend groß bemessen ist, um eine zuverlässig wirkende und standfeste Ölabstreifkante zu bilden, ohne dass die Funktion der Lauffläche des Kolbenrings beeinträchtigt wird (vgl. unten Schritt (d)).

Zweckmäßigerweise wird zwischen der asymmetrisch balligen Kontur und dem Vorsprung ein kurvenförmiger Übergangsbereich ausgebildet, um die Gefahr von Rissbildungen zu minimieren. Dieser kurvenförmige Übergangsbereich weist bevorzugt einen Radius von R = 0,10 - 0,30 mm auf.

Vor der Beschichtung der äußeren Mantelfläche können in an sich bekannter Weise eine oder mehrere Haft- oder Zwischenschichten aufgetragen werden, bspw. metallische Schichten aus Chrom, Titan, Wolfram, Zirkon, Vanadium und/oder Niob. Neben der Mantelfläche können in Schritt (c) selbstverständlich zusätzlich die obere Ringflanke und/oder die untere Ringflanke und/oder der Ringrücken mit mindestens einem Beschichtungsmittel beschichtet werden.

Das Beschichten erfolgt bevorzugt mittels eines PVD-Verfahrens, eines CVD-Verfahrens oder eines DLC-Verfahrens. Die so erhältlichen Dünnschichten sind äußerst verschleißbeständig und verleihen dem erfindungsgemäßen Kolbenring eine hohe Fresssicherheit. Besonders bevorzugt wird die Anwendung neuerer PVD-Verfahren wie bspw. PACVD-Verfahren, HIPIMS-Verfahren (Hochleistungs-Impuls-Magnetron-Sputtem) oder Lichtbogenentladung (Laser-Arc-Verfahren). Alle diese Verfahren sind dem Fachmann bekannt.

Hierfür können, je nach den Anforderungen des Einzelfalls, alle geeigneten und bekannten Beschichtungswerkstoffe, wie bspw. Chromnitrid, legiertes Chromnitrid, Chromcarbid, Chromaluminiumnitrid, Chromoxid, Titannitrid, Titanaluminiumnitrid, Titancarbonitrid, Titanborid, Zirkoncarbid, Zirkonnitrid, wasserstoffhaltiger Kohlenstoff, wasserstofffreier Kohlenstoff und/oder metalldotierter wasserstoffhaltiger Kohlenstoff, verwendet werden.

Ein Ausführungsbeispiel der Erfindung wird im Folgenden anhand der beigefügten Zeichnungen näher erläutert. Es zeigen in einer schematischen, nicht maßstabsgetreuen Darstellung:
- Fig. 1: ein Ausführungsbeispiel eines Kolbens für einen erfindungsgemäßen Kolbenring im Schnitt;
- Fig. 2: eine Detailansicht der Kontur der Mantelfläche eines Ringrohlings für ein erstes Ausführungsbeispiel eines erfindungsgemäßen Kolbenringes;
- Fig. 3: den Ringrohling gemäß Figur 2 nach dem Beschichten;
- Fig. 4: den fertigen erfindungsgemäßen Kolbenring;
- Fig. 5: ein weiteres Ausführungsbeispiel eines erfindungsgemäßen fertigen Kolbenrings;
- Fig. 6: ein weiteres Ausführungsbeispiel eines erfindungsgemäßen fertigen Kolbenrings.

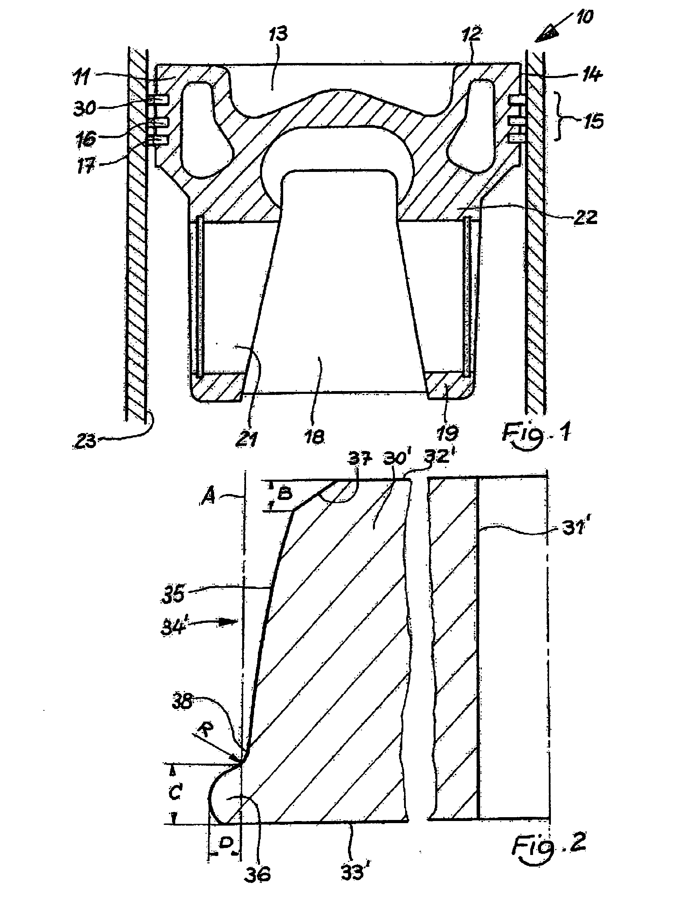

Figur 1 zeigt ein Ausführungsbeispiel eines Kolbens 10 für einen erfindungsgemäßen Kolbenring 30. Der Kolben 10 ist im Ausführungsbeispiel ein einteiliger Kastenkolben, der aus einem beliebigen metallischen Werkstoff hergestellt sein kann. Der Kolben 10 weist einen Kolbenkopf 11 mit einem Kolbenboden 12, einer Verbrennungsmulde 13, einem umlaufenden Feuersteg 14 und eine Ringpartie 15 auf, in deren Ringnuten drei Kolbenringe 30, 16, 17 nämlich ein Verdichtungsring 30, ein Zwischenring 16 und ein Ölabstreifring 17 aufgenommen sind. Der Kolben 10 weist ferner einen Kolbenschaft 18, gegenüber dem Feuersteg 14 zurückgesetzte Kolbennaben 19 mit Nabenbohrungen 21 zur Aufnahme eines Kolbenbolzens (nicht dargestellt) sowie Nabenabstützungen 22 auf. Der Kolben 10 ist im montierten Zustand in an sich bekannter Weise in einen Zylinder aufgenommen, dessen Lauffläche 23 in Figur 1 angedeutet ist. Die Lauffläche 23 kann in an sich bekannter Weise entweder aus der Bohrung des Zylinderkurbelgehäuses oder aus einer Zylinderlaufbuchse gebildet sein.

Im Ausführungsbeispiel ist der Verdichtungsring 30 erfindungsgemäß ausgebildet bzw. gemäß dem erfindungsgemäßen Verfahren hergestellt. Selbstverständlich kann jeder der Kolbenringe bzw. können zwei oder drei Kolbenringe gemäß dem erfindungsgemäßen Verfahren hergestellt sein.

Figur 2 zeigt einen Ringrohling 30' für einen erfindungsgemäßen Kolbenring 30. Die Oberseite des herzustellenden Kolbenrings 30 ist in üblicher Weise mit "TOP" bezeichnet. Der Ringrohling 30' weist einen Ringrücken 31', eine obere Ringflanke 32', eine untere Ringflanke 33' und eine äußere Mantelfläche 34' auf. Der Ringrohling 30' besteht im Ausführungsbeispiel aus einem der vorgenannten Werkstoffe gemäß ISO 6621-3, bspw. Gusseisen mit Kugelgraphit (Subklasse MC 53 oder MC 56) und ist im Querschnitt bspw. als Doppeltrapezring ausgebildet.

Entlang der äußeren Mantelfläche 34' wird zunächst in an sich bekannter Weise eine asymmetrisch ballige Kontur 35 ausgeformt. Die Berechnung der asymmetrisch balligen Kontur 35 ist dem Fachmann bekannt.

Zugleich wird ein sich radial nach außen erstreckender Vorsprung 36 in der äußeren Mantelfläche 34' im Bereich der unteren Ringflanke 33' eingeformt. Der Vorsprung 36 weist im Ausführungsbeispiel eine axiale Höhe C = 0,30 mm und, bezogen auf eine Referenzlinie A, eine radiale Breite D = 0,08 mm auf. Die Referenzlinie A wird so positioniert, dass der Vorsprung 36 um einen Bereich, der etwa der doppelten Schichtdicke der später aufzubringenden Beschichtung entspricht, über die Referenzlinie A herausragt. Die Schichtdicke beträgt, je nach den Anforderungen des Einzelfalls, etwa 2µm - 60 µm.

Zwischen der asymmetrisch balligen Kontur 35 und dem Vorsprung 36 wird ein kurvenförmiger Übergangsbereich 38 ausgebildet, um die Gefahr von Rissbildungen zu minimieren. Dieser kurvenförmige Übergangsbereich 38 weist im Ausführungsbeispiel einen Radius von R = 0,20 mm auf.

Ferner wird im Bereich der äußeren Mantelfläche 34' zwischen der asymmetrisch balligen Kontur 35 und der oberen Ringflanke 32' im Ausführungsbeispiel eine Fase 37 ausgeformt. Die Fase 37 weist im Ausführungsbeispiel eine axiale Höhe von B = 0,22 mm auf.

Damit ist die äußere Mantelfläche 34' fertig bearbeitet. Diese Bearbeitung kann, in Abhängigkeit von dem für den Ringrohling 30' verwendeten Werkstoff, in an sich bekannter Weise mit einem spanabhebenden Verfahren erfolgen.

Der Ringrohling 30' wird im Ausführungsbeispiel mittels eines an sich bekannten PVD- Verfahrens, wie bspw. PCD- Lichtbogenentladung, mit Chromnitrid beschichtet. Zur Vorbereitung der Beschichtung des Ringrohlings 30' wird dieser in an sich bekannter Weise gereinigt und ggf. mit einer aus Chrom bestehenden Haftvermittlerschicht beschichtet. Im Ausführungsbeispiel wird lediglich die äußere Mantelfläche 34' beschichtet. Zusätzlich können die obere Ringflanke 32' und/oder die untere Ringflanke 33' und/oder der Ringrücken 31' mit einem oder mehreren Beschichtungswerkstoffen beschichtet werden. Im Ausführungsbeispiel wird die äußere Mantelfläche 34' mit einer Beschichtung 39 vom Typ MIP230 aus Chromnitrid beschichtet. Die Beschichtung 39 weist eine poröse einphasige keramische Struktur mit einer Härte von 1.200 HV bis 1.600 HV (Vickers) auf.

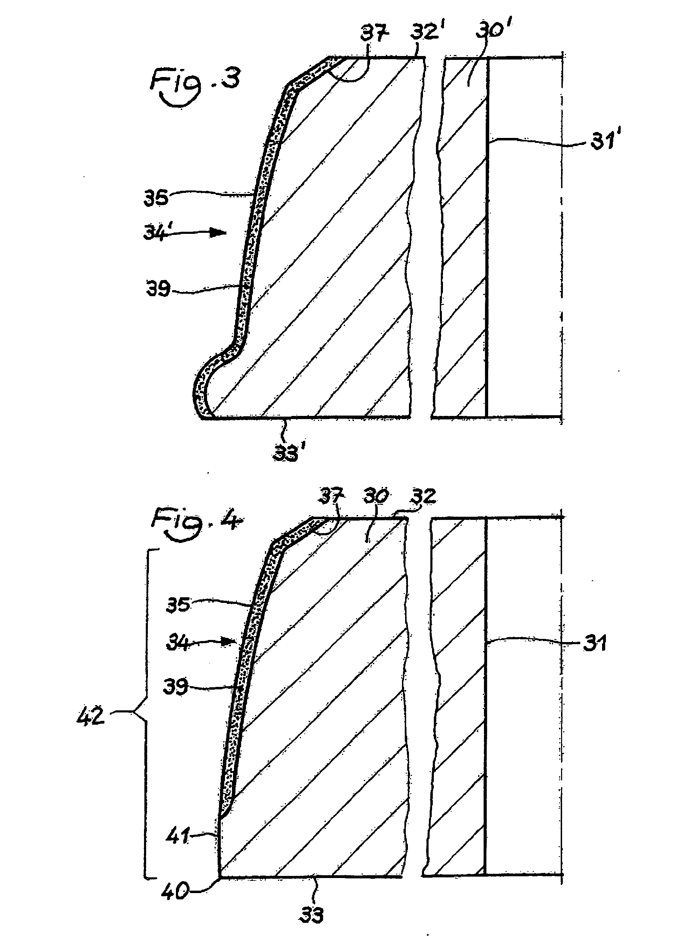

Figur 3 zeigt den beschichteten Ringrohling 30'. Es ist gut zu erkennen, dass die Fase 37 einen glatten und bündigen Übergang zwischen der Beschichtung 39 und der oberen Ringflanke 32' erzeugt.

Figur 4 zeigt den fertigen Kolbenring 30 mit Ringrücken 31, oberer Ringflanke 32, unterer Ringflanke 33 und beschichteter äußerer Mantelfläche 34. Zur Erzeugung des fertigen Kolbenrings 30 wird zunächst der Vorsprung 36 mittels spanabhebender Bearbeitung abgetragen. Dabei entsteht eine umlaufende Fläche 41, in deren Bereich der Werkstoff des Ringrohlings 30' bzw. des Kolbenrings 30 freigelegt ist. Die umlaufende Fläche 41 geht glatt und bündig in die asymmetrisch ballige Kontur 35 über. Mit dem Abtragen des Vorsprungs 36 wird eine scharfe Ölabstreifkante 40 gebildet, an der die umlaufende Fläche 41 und die untere Ringflanke 33 zusammentreffen.

Schließlich wird der Kolbenring 30 in an sich bekannter Weise nach- und/oder fertigbearbeitet, so dass im Bereich der umlaufenden Fläche 41 sowie der beschichteten asymmetrisch balligen Kontur 35 die fertige Lauffläche 42 erhalten wird.

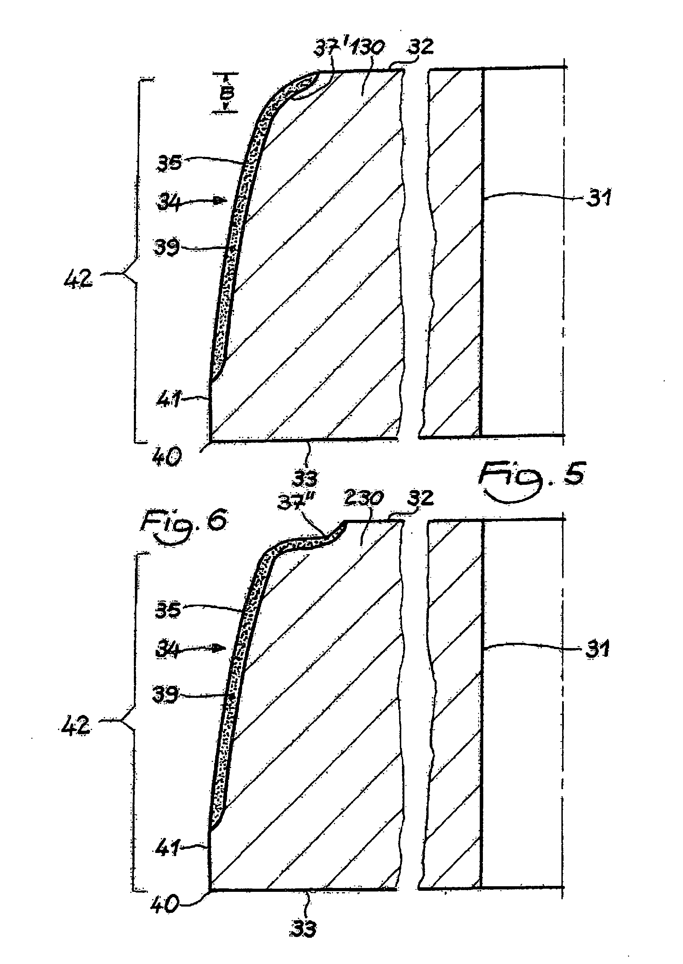

Figur 5 zeigt ein weiteres Ausführungsbeispiel eines erfindungsgemäßen fertigen Kolbenrings 130. Der Kolbenring 130 entspricht im Wesentlichen dem Kolbenring 30 gemäß den Figuren 1 bis 4 und wird mit dem gleichen erfindungsgemäßen Verfahren hergestellt. Gleiche Strukturelemente sind daher mit denselben Bezugszeichen versehen, und es wird diesbezüglich auf die Beschreibung zu den Figuren 1 bis 4 verwiesen.

Der einzige Unterschied besteht darin, dass am Kolbenring 130 im Bereich der äußeren Mantelfläche 34 zwischen der asymmetrisch balligen Kontur 35 und der oberen Ringflanke 32 ein konvex geformter Radius 37' ausgebildet wird. Der Radius 37' weist im Ausführungsbeispiel eine axiale Höhe von B = 0,22 mm auf. Es ist gut zu erkennen, dass auch der Radius 37' einen glatten und bündigen Übergang zwischen der Beschichtung 39 und der oberen Ringflanke 32 erzeugt.

Figur 6 zeigt ein weiteres Ausführungsbeispiel eines erfindungsgemäßen fertigen Kolbenrings 230. Der Kolbenring 230 entspricht im Wesentlichen dem Kolbenring 30 gemäß den Figuren 1 bis 4 und wird mit dem gleichen erfindungsgemäßen Verfahren hergestellt. Gleiche Strukturelemente sind daher mit denselben Bezugszeichen versehen, und es wird diesbezüglich auf die Beschreibung zu den Figuren 1 bis 4 verwiesen.

Der einzige Unterschied besteht darin, dass am Kolbenring 230 im Bereich der äußeren Mantelfläche 34 zwischen der asymmetrisch balligen Kontur 35 und der oberen Ringflanke 32 ein konkav geformter Radius 37" ausgebildet wird. Es ist gut zu erkennen, dass auch der konkav geformte Radius 37" einen glatten und bündigen Übergang zwischen der Beschichtung 39 und der oberen Ringflanke 32 erzeugt.

Im Ergebnis wird ein Kolbenring 30, 130, 230 zur Verwendung als Verdichtungsring erhalten, der mit einer ausgeprägten Ölabstreifkante versehen ist und im Motorbetrieb einen besonders wirksamen Transport überschüssigen Öls in Richtung der Kurbelwelle gewährleistet.

## Patentansprüche

1. Verfahren zur Herstellung eines Kolbenrings (30, 130, 230) für einen Kolben (10) eines Verbrennungsmotors, mit einem Ringrücken (31), einer oberen Ringflanke (32), einer unteren Ringflanke (33) und einer Lauffläche (42), **gekennzeichnet durch** die folgenden Verfahrensschritte:
(a) Bereitstellen eines Ringrohlings (30') mit einem Ringrücken (31'), einer oberen Ringflanke (32'), einer unteren Ringflanke (33') und einer äußeren Mantelfläche (34'),
(b) Ausformen einer asymmetrisch balligen Kontur (35) entlang der äußeren Mantelfläche (34') und Ausformen eines sich radial nach außen erstreckenden Vorsprungs (36) in der äußeren Mantelfläche (34') im Bereich der unteren Ringflanke (33'),
(c) Ausbilden einer Fase (37), eines konvex geformten Radius (37') oder eines konkav geformten Radius (37") mit einer axialen Höhe von B = 0,10 - 0,30 mm im Bereich der äußeren Mantelfläche (34') zwischen der asymmetrisch balligen Kontur (35) und der oberen Ringflanke (32'),
(d) Beschichten der äußeren Mantelfläche (34') mit einem Beschichtungswerkstoff,
(e) Abtragen des Vorsprungs (36) unter Freilegen des Werkstoffs des Ringrohlings (30') in Form einer in die Beschichtung (39) übergehenden umlaufenden Fläche (41) und Ausbilden einer Ölabstreifkante (40) zwischen der umlaufenden Fläche (41) und der unteren Ringflanke (33'),
(f) Nach- und/oder Fertigbearbeiten des beschichteten Ringrohlings (30') zu einem fertigen Kolbenring (30, 130, 230).

2. Verfahren nach Anspruch 1, **dadurch gekennzeichnet, dass** in Schritt (a) ein Ringrohling (30') in Form eines einseitigen Trapezrings, eines zweiseitigen Trapezrings oder eines Rechteckrings verwendet wird.

3. Verfahren nach Anspruch 1, **dadurch gekennzeichnet, dass** in Schritt (a) ein Ringrohling (30') aus einem Stahlwerkstoff oder einem Gusseisenwerkstoff verwendet wird.

4. Verfahren nach Anspruch 1, **dadurch gekennzeichnet, dass** in Schritt (b) der Vorsprung (36) mit einer axialen Höhe von C = 0,10 - 0,55 mm, bevorzugt von C = 0,20 - 0,40 mm, und/oder mit einer radialen Breite von D = 0,07 - 0,09 mm ausgeformt wird.

5. Verfahren nach Anspruch 1, **dadurch gekennzeichnet, dass** in Schritt (b) zwischen der asymmetrisch balligen Kontur (35) und dem Vorsprung (36) ein kurvenförmiger Übergangsbereich (38) ausgebildet wird.

6. Verfahren nach Anspruch 5, **dadurch gekennzeichnet, dass** der kurvenförmige Übergangsbereich (38) mit einem Radius von R = 0,10 - 0,30 mm ausgebildet wird.

7. Verfahren nach Anspruch 1, **dadurch gekennzeichnet, dass** zwischen Schritt (c) und Schritt (d) auf die äußere Mantelfläche (34') eine oder mehrere Haft- oder Zwischenschichten aufgetragen werden.

8. Verfahren nach Anspruch 1, **dadurch gekennzeichnet, dass** in Schritt (d) zusätzlich die obere Ringflanke (32') und/oder die untere Ringflanke (33') und/oder der Ringrücken (31') mit mindestens einem Beschichtungsmittel beschichtet werden.

9. Verfahren nach Anspruch 1, **dadurch gekennzeichnet, dass** in Schritt (d) das Beschichten mittels eines PVD-Verfahrens oder eines CVD-Verfahrens oder eines DLC-Verfahrens erfolgt.

10. Kolbenring (30, 130, 230), herstellbar mit einem Verfahren nach einem der Ansprüche 1 bis 9.

11. Kolbenring (30, 130, 230) für einen Kolben (10) eines Verbrennungsmotors, mit einem Ringrücken (31), einer oberen Ringflanke (32), einer unteren Ringflanke (33) und einer einseitig gekammerten, mit einer Beschichtung (39) versehenen Lauffläche (42), wobei eine in die Beschichtung (39) übergehende umlaufende Fläche (41) vorgesehen ist, die unter Ausbildung einer Ölabstreifkante (40) in die untere Ringflanke (33) übergeht, **dadurch gekennzeichnet, dass** die Lauffläche (42) eine asymmetrisch ballige Kontur aufweist, dass die Lauffläche (42) über eine Fase (37), einen konvex geformten Radius (37') oder einem konkav geformten Radius (37") mit einer axialen Höhe von B = 0,10 - 0,30 mm in die obere Ringflanke (32) übergeht.

12. Kolbenring (30, 130, 230) gemäß Anspruch 11, nämlich ein Verdichtungsring.

## Claims

1. Method for producing a piston ring (30, 130, 230) for a piston (10) of an internal combustion engine, comprising a ring back (31), an upper ring side (32), a lower ring side (33) and a running surface (42), said method being **characterised by** the following method steps:
a) providing a ring blank (30') having a ring back (31'), an upper ring side (32'), a lower ring side (33') and an outer lateral surface (34'),
(b) forming an asymmetrically spherical contour (35) along the outer lateral surface (34') and forming a projection (36) in the outer lateral surface (34'), in the region of the lower ring side (33'), which projection extends radially outwards,
(c) forming a chamfer (37), a convex radius (37') or a concave radius (37") having an axial height of B = 0.10 - 0.30 mm in the region of the outer lateral surface (34') between the asymmetrically spherical contour (35) and the upper ring side (32'),
(d) coating the outer lateral surface (34') with a coating material,
(e) removing the projection (36), thereby exposing the material of the ring blank (30') in the form of a circumferential surface (41) that transitions into the coating (39), and forming an oil removal edge (40) between the circumferential surface (41) and the lower ring side (33'),
(f) reworking and/or finishing the coated ring blank (30') to produce a finished piston ring (30, 130, 230).

2. Method according to claim 1, **characterised in that**, in step (a), a ring blank (30') in the form of a wedge type ring, a keystone ring, or a plain compression ring is used.

3. Method according to claim 1, **characterised in that**, in step (a), a ring blank (30') consisting of a steel material or of a cast iron material is used.

4. Method according to claim 1, **characterised in that**, in step (b), the projection (36) is formed having an axial height of C = 0.10 - 0.55 mm, preferably of C = 0.20 - 0.40 mm and/or having a radial width of D = 0.07 - 0.09 mm.

5. Method according to claim 1, **characterised in that**, in step (b), a curved transition region (38) is formed between the asymmetrically spherical contour (35) and the projection (36).

6. Method according to claim 5, **characterised in that** the curved transition region (38) is formed having a radius of R = 0.10 - 0.30 mm.

7. Method according to claim 1, **characterised in that**, between step (c) and step (d), one or more adhesive layers or intermediate layers are applied to the outer lateral surface (34').

8. Method according to claim 1, **characterised in that**, in step (d), the upper ring side (32') and/or the lower ring side (33') and/or the ring back (31') are also coated with at least one coating agent.

9. Method according to claim 1, **characterised in that**, in step (d), coating is carried out by means of a PVD method or a CVD method or a DLC method.

10. Piston ring (30, 130, 230) which can be produced using a method according to any of claims 1 to 9.

11. Piston ring (30, 130, 230) for a piston (10) of an internal combustion engine, comprising a ring back (31), an upper ring side (32), a lower ring side (33) and a running surface (42) which is chambered on one side and provided with a coating (39), a circumferential surface (41) which transitions into the coating (39) being provided, which coating transitions into the lower ring side (33) such that an oil removal edge (40) is formed, **characterised in that** the running surface (42) has an asymmetrically spherical contour, and **in that** the running surface (42) transitions into the upper ring side (32) via a chamfer (37), a convex radius (37') or a concave radius (37") having an axial height of B = 0.10 - 0.30 mm.

12. Piston ring (30, 130, 230) according to claim 11, specifically a compression ring.

## Revendications

1. Procédé destiné à la fabrication d'un segment de piston (30, 130, 230) pour un piston (10) d'un moteur à combustion interne, avec un dos de segment (31), un flanc supérieur de segment (32), un flanc inférieur de segment (33) et une surface de roulement (42), **caractérisé par** les étapes de procédé suivantes :
(a) la mise à disposition d'une ébauche de segment (30') avec un dos de segment (31'), un flanc supérieur de segment (32'), un flanc inférieur de segment (33') et une surface d'enveloppe extérieure (34'),
(b) le façonnage d'un contour bombé (35) de manière asymétrique le long de la surface d'enveloppe extérieure (34') et le façonnage d'une partie en saillie (36), s'étendant vers l'extérieur dans le sens radial, dans la surface d'enveloppe extérieure (34') au niveau du flanc inférieur de segment (33'),
(c) la formation d'un chanfrein (37), d'un rayon façonné de manière convexe (37') ou d'un rayon façonné de manière concave (37"), avec une hauteur axiale de B = 0,10 - 0,30 mm au niveau de la surface d'enveloppe extérieure (34') entre le contour bombé (35) de manière asymétrique et le flanc supérieur de segment (32'),
(d) le revêtement de la surface d'enveloppe extérieure (34') par un matériau de revêtement,
(e) la suppression de la partie en saillie (36) de manière à dégager le matériau de l'ébauche de segment (30') en lui conférant la forme d'une surface périphérique (41) se transformant en le revêtement (39), et la formation d'une arête de raclage d'huile (40) entre la surface périphérique (41) et le flanc inférieur de segment (33'),
(f) le réusinage et/ou la finition de l'ébauche de segment (30') pourvue du revêtement en un segment de piston fini (30, 130, 230).

2. Procédé selon la revendication 1, **caractérisé en ce que** dans l'étape (a), une ébauche de segment (30') est utilisée sous la forme d'une bague trapézoïdale à une face, d'une bague trapézoïdale à deux faces ou d'une bague rectangulaire.

3. Procédé selon la revendication 1, **caractérisé en ce que** dans l'étape (a), une ébauche de segment (30') est utilisée à partir d'un matériau en acier ou d'un matériau en fonte.

4. Procédé selon la revendication 1, **caractérisé en ce que** dans l'étape (b), la partie en saillie (36) est façonnée avec une hauteur axiale de C = 0,10 - 0,55 mm, de préférence de C = 0,20 - 0,40 mm, et/ou avec une largeur radiale de D = 0,07 - 0,09 mm.

5. Procédé selon la revendication 1, **caractérisé en ce que** dans l'étape (b), une zone de transition (38) incurvée est formée entre le contour bombé (35) de manière asymétrique et la partie en saillie (36).

6. Procédé selon la revendication 5, **caractérisé en ce que** la zone de transition (38) incurvée est formée avec un rayon de R = 0,10 - 0,30 mm.

7. Procédé selon la revendication 1, **caractérisé en ce qu'**entre l'étape (c) et l'étape (d), une ou plusieurs couches d'adhérence ou couches intermédiaires sont appliquées sur la surface d'enveloppe extérieure (34').

8. Procédé selon la revendication 1, **caractérisé en ce que** dans l'étape (d), le flanc supérieur de segment (32') et/ou le flanc inférieur de segment (33') et/ou le dos de segment (31') sont revêtus en outre d'au moins un agent de revêtement.

9. Procédé selon la revendication 1, **caractérisé en ce que** dans l'étape (d), le revêtement est réalisé au moyen d'un procédé PVD ou d'un procédé CVD ou d'un procédé DLC.

10. Segment de piston (30, 130, 230), qui peut être fabriqué à partir d'un procédé selon l'une des revendications 1 à 9.

11. Segment de piston (30, 130, 230) pour un piston (10) d'un moteur à combustion interne, avec un dos de segment (31), un flanc supérieur de segment (32), un flanc inférieur de segment (33) et une surface de roulement (42), chambrée d'un seul côté et pourvue d'un revêtement (39), dans lequel est prévue une surface périphérique (41) se transformant en le revêtement (39) et qui se transforme en le flanc inférieur de segment (33) en formant une arête de raclage d'huile (40), **caractérisé en ce que** la surface de roulement (42) présente un contour bombé de manière asymétrique, et **en ce que** la surface de roulement (42) se transforme en le flanc supérieur de segment (32) par l'intermédiaire d'un chanfrein (37), d'un rayon façonné de manière convexe (37') ou d'un rayon façonné de manière concave (37"), avec une hauteur axiale de B = 0,10 - 0,30 mm.

12. Segment de piston (30, 130, 230) selon la revendication 11, à savoir un segment de compression.
